# EUROPÄISCHE PATENTSCHRIFT

(11) **EP 0 640 169 B1**
(45) Veröffentlichungstag und Bekanntmachung des Hinweises auf die Patenterteilung: **10.09.1997**
(21) Anmeldenummer: 94905036.3
(22) Anmeldetag: 11.01.1994
(51) Int. Cl.: E06B 3/66, B32B 17/10

(54) **RAHMENLOSE ISOLIERVERGLASUNG UND VERFAHREN ZU DEREN HERSTELLUNG**
FRAMELESS INSULATING GLAZING AND PROCESS FOR PRODUCING THE SAME
VITRAGE ISOLANT SANS CADRE ET SON PROCEDE DE FABRICATION

(30) Priorität: 11.01.1993 DE 4300481
(43) Veröffentlichungstag der Anmeldung: 01.03.1995
(73) Patentinhaber: Kunert, Heinz, Dr., 50935 Köln (DE)
(72) Erfinder: Kunert, Heinz, Dr., 50935 Köln (DE)
(74) Vertreter: Degwert, Hartmut, Dipl.-Phys.
(86) Internationale Anmeldenummer: EP9400069
(87) Internationale Veröffentlichungsnummer: WO9416187

(56) Entgegenhaltungen:
- EP-A- 0 113 209
- CH-A- 348 803
- CH-A- 426 183
- FR-A- 1 152 278
- US-A- 4 205 104

## Beschreibung

Die Erfindung betrifft eine Isolierverglasung mit mindestens zwei parallel zueinander angeordneten Scheiben, die durch einen randumlaufenden Abstandhalter miteinander verbunden sind, sowie ein Verfahren zur Herstellung der Isolierverglasung.

Seit jeher werden Fensterflügelverglasungen stets mit einfassenden Rahmungen ausgeführt, die den Glasplatten Flächenstabilität verleihen und für das fragile Glasmaterial Kantenschutz bedeuten. Die aus Holz-, Kunststoff- oder Aluminiumprofilen bestehenden Fensterrahmungen dienen insbesondere zur Aufnahme der funktionalen Beschläge und ermöglichen infolge ihrer Steifigkeit und Profilierung eine zuverlässige Abdichtung gegenüber dem im Mauerwerk eingelassenen Blendrahmen.

Eine Abkehr von diesen tradierten Vorstellungen hin zu einer rahmenlosen Fensterflügelverglasung führt zu einem beachtlichen Gewinn an transparenter Fläche bei gleichem Hüllflächenanteil der Fenster. Je nach Breite des Flügelrahmens läßt sich bei Fortfall des opaken Tragerahmens ein Zugewinn von lichter Fläche für den Einfall von Licht und Sonnenstrahlung von 20 % bis 40 % erzielen.

Ein besonderer Vorteil für das Bauwesen liegt in der Rationalität rahmenloser Fensterverglasungen. Man denke dabei allein an den Aufwand von Werkstoffen wie Holz, Kunststoff und Aluminium für die Herstellung der Flügelrahmungen, an deren Pflegebedarf, ferner an deren eingeschränkte Alterungsbeständigkeit und nicht zuletzt an deren Recycling-Problematik. Dabei ist auch zu beachten, daß bei zunehmender Rahmengröße zusätzliche Maßnahmen getroffen werden müssen, um den an den Rahmen gestellten Anforderungen zu entsprechen. So ist bei Aluminiumrahmen, die eine Fläche von größer als etwa 1 m² umfassen, eine Stahlverstärkung erforderlich.

Da zudem heutzutage infolge fortschrittlicher Isolierglastechnik die Wärmedämmwerte der Scheibenelemente die der Umrahmungen übertreffen, führt in der Regel die tragende Umrahmung zu einer Erhöhung des Wärmedurchgangs des Fensterflügels insgesamt.

Anwendungsfähige Konzepte rahmenloser Fensterflügel in der Art, daß das Glaselement unverrahmt den Fensterflügel darstellt, haben trotz der genannten Vorteile in der bisherigen Baupraxis kaum Anwendung finden können. Eine Erklärung hierfür ist darin zu sehen, daß es sich bei Fenstern um Bauteile der Gebäudehüllfläche handelt, die in erheblichem Maße Wind- und Wetterlasten ausgesetzt sind, und insofern einer anspruchsvollen Dicht- und Verschlußmechanik bedürfen, die bisher nur von einer biegesteifen, das Scheibenelement tragenden Rahmenkonstruktion geleistet werden konnte.

Erschwerend tritt hinzu, daß heutzutage rahmenlose Konzepte an doppelscheibigen Isolierglasscheiben realisiert werden müssen, da Isolierscheiben mittlerweile zum Standard von Fensterverglasungen im Bauwesen gehören.

Isolierverglasungen sind durch ihren doppelscheibigen Aufbau gekennzeichnet. Die beiden Glasscheiben, je nach Flächengröße in einer Plattenstärke von 3 - 6 mm, schließen einen mit Luft oder mit Edelgas gefüllten 12 - 16 mm breiten Zwischenraum ein, der umlaufend zum Scheibenrand mit einem Aluminium-Hohlsteg oder durch einen entsprechenden Steg aus einem elastischen oder plastischen Kunststoffmaterial verfestigt und abgedichtet wird.

Dem abstandgebenden Steg kommt dabei eine doppelte Funktion zu. Er übernimmt als Klebeverbindung den mechanischen Zusammenhalt der Scheiben und die diffusionsdichte Versiegelung des Scheibenzwischenraumes.

Eine Klebeverbindung, auch über einen formsteifen Zwischensteg, ist aber nicht geeignet, die Scheiben zu einem mechanisch rigiden, selbsttragenden Plattenkörper zu verfestigen. Sie kann die infolge des Eigengewichts der Scheiben auftretenden Scherkräfte nicht aufnehmen. Schon deshalb bedarf es hier der Aufnahme eines solchen Scheibenelements in eine tragende Rahmenkonstruktion, in der das Element zur Vermeidung eines Verschiebens der Einzelscheiben gegeneinander in dem Falz der Rahmenleisten über Klotzungen gesichert werden muß. Die Einlagerung des Scheibenelements in dem Glasfalz erfordert dann bekanntlich aufwendige Maßnahmen der Befestigung, der Abdichtung und der Kondenswasserabführung.

Das Scheibenelement selbst hat dabei keine tragende Funktion. Es mangelt an einer hinreichend starren, kraftschlüssigen Verfestigung der Scheiben miteinander. Um das Scheibenelement unmittelbar, also ohne Tragrahmen, an den Blendrahmen anzuschlagen, bedarf es insbesondere einer kraftschlüssigen Integration der Trage- und Verriegelungsbänder.

Aus einem Aufsatz von F. B. Grimm: "Glas als tragender Baustoff: Glassandwich-Elemente" in glas + rahmen (1991) 19, 1020 - 1028, sind Isolierverglasungen aus zwei kraftschlüssig gekoppelten Scheiben bekannt. Die kraftschlüssige Koppelung der beiden Isolierglasscheiben wird entweder durch mechanisch verbundene oder schubfest verklebte Abstandhalter erreicht. Im ersten Fall greifen auf die Glasplatten aufgeschweißte Bolzen in Bohrungen ein, die in den Abstandhaltern vorgesehen sind. Alternativ können die Glasplatten durch Senkkopfschrauben miteinander verbunden werden, die durch paßgenaue Lochbohrungen geführt und in entsprechenden Gewindebohrungen der Abstandhalter befestigt werden.

Im zweiten Fall weisen die Abstandhalter einen Aufnahmeraum für einen Silikon-Klebstoff auf, wobei der Abstandhalter den Klebstoff vollständig umfaßt und so Formveränderungen bei Schubbeanspruchungen unterbindet. Als dritte Variante wird ein Sandwichkern aus zwei zusammensteckbaren Teilplatten vorgeschlagen, der vollflächig mit den zwei Glasplatten verklebt wird.

Eine kraftschlüssige Verfestigung im Randbereich kann also in einfacher Weise bereits durch abstandsgebende Verschraubungen oder Vernietungen des Scheibenpaares über paßforme Lochbohrungen erreicht werden. Lochbohrungen jedoch, zumal in Randzonen, bedeuten stets einen Eingriff in die Integrität eines spröden Plattenkörpers. Eine biegesteife Verfestigung der Randzonen über größere Längen ist dann ohne das Hinzutreten zusätzlicher Abstützleisten und lastaufnehmender Randverfestigungen infolge des Auftretens lokaler Spannungsspitzen nicht zu erreichen.

Auch eine biegesteife Verfestigung über einen massiven Formkörper, etwa aus Holz, Kunststoff oder Metall führt nicht zu der beabsichtigten Lösung des Problems. Die durch thermische oder durch Biegebeanspruchung ausgelösten Belastungen führen über die Länge zu Zugspannungen, die, auf die Scheibenplatten übertragen, dort gegebene Kerbungen oder Haarrisse aufreißend den Bruch der Scheiben auslösen können.

Desgleichen sind starr verklebte Distanzblöcke möglichst zu vermeiden, da sie diskontinuierlich zu örtlichen Spannungsbelastungen der Scheibenoberflächen führen und insbesondere bei stoßartiger Krafteinleitung zu sogenannten, für Glasplatten nicht erträglichen Spannungshöfen führen.

Auch eine mehr elastische oder plastische Verklebung massiver Distanzleisten oder Distanzblöcke kann insofern nicht zur Problemlösung beitragen, zumal wenn durch sie gleichfalls die Funktion der diffusionssicheren Abdichtung des Scheibenzwischenraums übernommen werden muß. Auf eine solche Klebenaht wirken bei senkrecht stehenden Isolierscheibenelementen nicht nur parallel zu den Scheiben auftretende, gewichtsbedingte Scherkräfte ein, sondern auch dauerhaft durch Windlasten und durch thermische Verwölbungen hervorgerufene, den Scheibenrand tangierende Biegemomente.

Zudem sind die vorgenannten Verbindungstechniken nicht geeignet, den Wärmedurchgang rahmenloser Isolierglaselemente in peripheren Bereichen den Werten des Scheibenelements anzupassen, dabei aber keineswegs den Lichtdurchgang zu mindern.

Durch die Erfindung wird nun erstmals ein Verglasungselement geschaffen, bei dem die Scheiben unter Vermeidung von schädlichen, insbesondere lokalen Spannungen und Beanspruchungen kraftschlüssig gekoppelt und daher ohne Festigkeitseinbußen als rahmenlose Verglasung geeignet sind, wobei überdies die thermische Qualität und die Lichtdurchlässigkeit gegenüber einer gerahmten Verglasung deutlich gesteigert werden.

Gemäß der Erfindung wird eine Isolierverglasung mit mindestens zwei parallel zueinander angeordneten Scheiben bereitgestellt, die durch einen randumlaufenden Abstandhalter miteinander verbunden sind, dadurch gekennzeichnet, daß der Abstandhalter von einem Formkörper gebildet ist, der eine Vielzahl von elastischen, biegesteifen und einander kreuzenden Filamenten aufweist, die quer zu den Ebenen der Scheiben verlaufen und eine kraftschlüssige Verstrebung zwischen den Scheiben bilden.

Die Erfindung folgt der Idee, eine Isolierglasscheibe in ein formstabiles, biegesteifes und selbsttragendes Plattenelement zu verwandeln, das geeignet ist, ohne Einbindung in einen versteifenden, dichtenden und die Beschlagsmechanik aufnehmenden tragenden Holz-, Kunststoff- oder Aluminiumrahmen, die üblichen Funktionen eines Fensterflügels zu übernehmen.

Dabei wird die Konzeption verfolgt, die Funktion des seitlich umlaufenden Verschlusses des Scheibenzwischenraums und dessen diffusionsdichte Versiegelung von der Funktion der Sicherung des mechanischen Zusammenhalts und der strukturellen Festigkeit des Verglasungselements zu trennen und letztere Funktionen durch eine mechanisch rigide und kraftschlüssige Verfestigung der Scheiben randumlaufend zu bewerkstelligen, wobei die auftretenden Belastungen durch die elastischen Filamente gleichförmig und ohne jegliche lokale Spannung über den Randstreifen der Scheiben verteilt werden. Trotz ihrer Elastizität bilden die Filamente einen starren, schubfesten Verbund der Scheiben, da sie einander kreuzend durch den Triangulierungseffekt insgesamt eine formsteife Verstrebung bilden.

Ein solcher Glasplattenkörper bedarf zu seiner Stabilisierung keiner zusätzlichen tragenden Verrahmung. Er besitzt durch die miteinander starr und kraftschlüssig verbundenen peripheren Flächenteile eine Statik, die über jegliche aufgesetzten und tragenden Verrahmungen hinausgeht. Infolge des hohen Elastizitätsmoduls des Glases werden die Lasten von der gesamten Fläche der Scheiben, und nicht nur von den miteinander kraftschlüssig verbundenen Scheibenrandbereichen aufgenommen.

Zweierlei muß bei der technischen Konzeption einer randumlaufenden, kraftschlüssigen und rigiden Verkoppelung zweier Glasplatten vorrangig Beachtung finden. Zum einen ist es die Vielfalt der Lasten, die der Randverbund bzw. die umlaufende, zwischen den Scheiben angeordnete Rahmenstruktur aufnehmen muß. Es sind dies, wie bereits erwähnt, Scherbeanspruchungen durch die Gewichtslasten der einzelnen Scheiben, die dem Schwerpunkt der Scheiben beim Öffnen eines seitlich angeschlagenen Fensterflügels folgend, nicht nur in einer Richtung ansetzen. Hinzu treten die Biegezug- und Biegedruckbelastungen, die durch das wechselseitige Ein- und Auswölben der Scheiben infolge thermisch bedingter Volumenänderungen des eingeschlossenen Gasmediums auf die Randverfestigung einwirken. Ferner sind es wechselseitige stoßförmige Biegezug- und Biegedrucklasten sowie Zug- und Drucklasten infolge der Winddruck- und Windsogkräfte. Schließlich treten in ähnlicher Weise Lasten beim manuellen öffnen und Schließen des Fensterflügels auf.

Zum anderen müssen bei der randumlaufenden, kraftschlüssigen Verkopplungstechnik die Struktureigenschaften des zu verbindenden Plattenmaterials beachtet werden. Glas ist ein spröder, hochelastischer Werkstoff, mit einem an sich höheren Elastizitätsmodul als Stahl. Seine Druckfestigkeit ist mit Werten von ca. 800 N/mm² beachtlich. Dagegen beträgt seine (praktisch zulässige) Zugfestigkeit jedoch nur ca. 80 N/mm², bedingt durch Mikrorisse und -einschlüsse an den Glasoberflächen, die insbesondere durch die Schnittbearbeitung im Randbereich anzutreffen sind.

Die bekannte, sprichwörtliche Bruchempfindlichkeit von Glasplatten beruht meist auf einem Aufreißen solcher Mikrorisse durch Minderung der Zugspannungen an den Oberflächen infolge Biegebeanspruchung oder aber durch örtlich aufkommende Zugspannungsspitzen. Durch flächige Aufbringung von Druckschichten auf die Oberflächen der Glasplatten gelingt es, die Bruchfestigkeit von Glasplatten zu erhöhen. Es sind dann höhere Zugkräfte zum Öffnen der Mikrorisse, also zur Auslösung eines Scheibenbruches, erforderlich.

Bei vorgespannten Glasplatten, die eine um den Faktor 3 - 4 höhere Biegebruchfestigkeit erreichen, bilden sich durch Aufheizung des Glases, gefolgt von einer raschen Abkühlung, im Kern des Glases Zugspannungen, an den Oberflächen hingegen Druckspannungen aus. In Analogie zu diesem Prinzip werden tragfähige Betonschichten mittig mit Stahlnetzen armiert.

Für die kraftschlüssige randumlaufende Verkoppelung der Scheiben eines Isolierglaselements wird daher erfindungsgemäß ein formstabiler Bandkörper verwendet, der bei einer äußerst geringen materiellen Dichte eine hohe strukturelle elastische Steife aufweist, der erstens die aus der Biegung der Scheiben resultierenden Schubkräfte kompensatorisch auf das andere Scheibenelement übertragen kann, der zweitens die an den Kontaktflächen mit den Scheiben nach allen Richtungen auftretenden Scherkräfte bei möglichst gleichmäßiger Krafteinleitung dämpfend aufzunehmen vermag, und der drittens den auf den Scheibenverbund einwirkenden Druck- und Zuglasten widerstehen kann. Hinzu tritt viertens noch das Vermögen eines solchen zwischen den Scheiben eingelagerten Formkörpers, inhärente Zugspannungen auszubilden.

Schließlich wird bei diesem Formkörper erfindungsgemäß Lichttransparenz bzw. Lichttransluzenz erreicht und das Vermögen, von dem Isolierglaselement kaum abweichende Wärmedämmwerte einzuhalten.

Bei Formkörpern, die diesen Anforderungen und Qualitäten gerecht zu werden vermögen, kann es sich nicht um Festkörper von materieller Substanz handeln. Vielmehr müssen strukturelle Gebilde zum Einsatz kommen, das heißt Formkörper, die sich aus einer Vielzahl dünner, biegesteifer sowie hochelastischer, nach allen Richtungen belastbarer Verstrebungselemente zusammensetzen.

Erfindungsgemäß wird vorgeschlagen, hierfür sogenannte, an sich bekannte textile Abstandsgewebe oder -gewirke zu verwenden. Solche aus Glas-, Kunststoff- oder Kohlenstoffasern, oder aber entsprechend spezifischer Anforderungen auch aus Mischungen solcher Materialien bestehende Gewebe, setzen sich in üblicher Bauart aus zwei Gewebedecklagen zusammen, die durch senkrecht oder winklig einlaufende Fäden verbunden sind. Diese Stegfäden, die je nach Anforderung unterschiedlich angeordnet sein können, halten gerüstartig die beiden Gewebelagen auf Abstand. Die Stegfäden bilden dabei in Form einer Schlaufen- oder Maschenstruktur im wesentlichen senkrecht auf den Decklagen stehende Stegreihen aus, wobei die Decklagen miteinander zusätzlich noch durch diagonal zu den Stegreihen verlaufende Fadenstrukturen verknüpft werden können. Derartige Abstandsgewebe wurden bisher vor allem als Distanzschichten zur Herstellung verschiedener Faserverbundwerkstoffe verwendet.

Abstandsgewebe und Abstandsgewirke werden bei ihrer Verarbeitung üblicherweise mit Harz getränkt bzw. imprägniert. Die Harztränkung kann sowohl durch Eintauchen in die Harzmasse als auch durch gleichmäßigen Auftrag auf das Gewebe erreicht werden. Das überschüssige Harz wird anschließend zwischen Folien oder Walzen ausgepreßt. Nach der Imprägnierung mit Harzen richten sich die Stegfäden ohne Hilfsmittel selbstständig wieder in die ursprüngliche Höhe auf und ermöglichen durch ihre definierbare Länge kalibrierende Abstände zu den Decklagen. Anordnung und Höhe der Fäden bestimmen die Festigkeit der nach Aushärtung der Harzschlichten entstehenden Sandwichkonstruktion. In vorteilhafter Weise sind nach der Aushärtung des Harzes ein wesentlicher Anteil der sich kreuzenden Stegfäden in den Kreuzungspunkten miteinander verbunden.

Für die randsteife und kraftschlüssige Verbindung von rahmenlosen Fensterflügel-Isolierverglasungen sollen Abstandsgewebe aus Glasfilamentfasern wegen ihres hohen Elastizitätsmoduls und ihrer guten Lichttransmission bevorzugt Anwendung finden, die - mit Silanschlichten versehen - ein gutes Haftvermögen für die Vernetzung mit einer breiten Palette von Harzen wie Epoxid-, Polyurethan-, Phenol- und Polyesterharzen bereitstellen.

Entsprechend einer vorteilhaften, einfachen Verfahrensweise wird vorgeschlagen, auf den Rand einer der Scheiben umlaufend ein etwa 20 - 30 mm breites, bei größeren Flächenmaßen ein etwa 40 - 50 mm breites harzgetränktes Abstandsgewebe aufzulegen. Nach paßformem Auflegen der zweiten Scheibe wird der entstehende Schichtkörper zunächst in einer Preßform zusammengedrückt, so daß die Glasscheiben umlaufend randseitig an die Decklagen des Gewebes klebend anbinden.

Beim Aushärten des Harzes richten sich die senkrecht zu den Decklagen des Glasfasergewebes gewirkten Stegfäden infolge ihrer Rückstellkräfte wieder auf. Dieser Vorgang kann in vorteilhafter Weise durch ein kalibrierendes Öffnen der Preßform zu gesteuerter Einhaltung planparalleler Abstände der Glasplatten unterstützt werden, so etwa über Sogwirkung, wobei die Glasscheiben, den Preßplatten anhaftend, voneinander abgezogen werden. Durch die Harzummantelung bilden die Stegfäden nach erfolgter Aushärtung des Harzes eine formhaltige, außerordentlich biegesteife Stützstruktur. In Anbetracht des hohen Elastizitätsmoduls der Glasfasern kann diese Stützstruktur, wie eingangs als Zielsetzung ausführlich erläutert, sowohl hohe Schubkräfte aufnehmen und übertragen, aber auch hohen Druck- und Zugbelastungen widerstehen. Man erhält insofern allein durch eine umlaufende Randausstattung von zwei- oder mehrscheibigen Isolierglaselementen mit solchen Glasfaserabstandsgeweben formstabile, verwindungssteife und selbsttragende Plattenkörper.

Ein besonderer Vorzug der Verwendung von textilen Abstandsgeweben der beschriebenen Art ist die Transluzenz dieser versteifenden Abstandsgewebe und gleichfalls ihr dem Isolierglaskörper angepaßter Wärmedämmwert. Sowohl die Transluzenz, als auch der Wärmedämmwert kann durch eine spezifische Ausbildung der Stegfäden eine Steigerung erfahren.

So wird vorgeschlagen, die Glasfasern analog zu optischen Lichtleiterfasern mit Harzschlichten graduierter Dichte zu versehen, um so bei geeigneter Ankoppelung der Stegfasern durch die Harzschicht der Decklagen verlustarme Lichtleitereffekte zu erzielen.

Was die Erhöhung der Wärmedämmwerte anbetrifft, so kann man den Wärmedurchgang infolge Wärmeleitung durch dünneres Stegfasermaterial, den Wärmedurchgang infolge Konvektion dann durch eine größere Dichte dieses dünnen Fasermaterials und die damit einhergehende Minderung der Gasbewegung im Scheibenzwischenraum reduzieren.

Des weiteren ist es vorteilhaft, die zur Herstellung der textilen Abstandsgewebe verwendeten Glas-, Kunststoff- oder Kohlenstoffasern ganz oder wenigstens teilweise als Hohlfasern auszubilden. Dadurch kann der Wärmedurchgang durch den Formkörper noch weiter verringert werden. Außerdem sind mit Hilfe von Hohlfasern auch ohne zusätzliche Schlichten Lichtleitereffekte erzielbar, oder werden zumindest durch diese begünstigt. Mit Hohlfasern läßt sich ferner eine größere Steifigkeit und Elastizität des Abstandsgewebes erreichen. Dies trägt dazu bei, daß sich die Stegfäden nach der Imprägnierung leichter aufrichten lassen, bzw. sich aus eigener Kraft wieder aufrichten.

Bevorzugt ist ferner die Anordnung von randumlaufenden Dichtungsstegen außenseitig zum Abstandsgewebe. Die Entlastung dieser zwischen den Scheiben angeordneten Dichtungsstege von der mechanischen Funktion des stabilen formhaltigen Zusammenhalts des Isolierglaselements ist dabei von Vorteil für die Lebensdauer der Isolierverglasungen. Infolge der kraft- und formschlüssigen, breitflächigen Verfestigung der Randbereiche des Isolierscheibenelements durch den Formkörper können vom Mittelfeld der Scheibe durch Windlasten und atmosphärisch hervorgerufene Verwölbungen ausgehende Kräfte kaum schädigende Wirkungen auf die Randabdichtungsstege ausüben. Insofern ist man in der Lage, Dichtungsmaterial zu verwenden, das bevorzugt auf Funktionen der Diffusionsdichte und eines geringen Wärmedurchgangs abgestellt ist.

Weitere Merkmale und Vorteile der Erfindung ergeben sich aus der folgenden Beschreibung verschiedener Ausführungsformen und aus der beigefügten Zeichnung, die nachfolgend näher erläutert werden. In der Zeichnung zeigen:
- Fig. 1: eine erfindungsgemäße Isolierverglasung im Querschnitt;
- Fig. 2 bis Fig. 14: jeweils weitere Ausführungsformen der Erfindung im Querschnitt,
- Fig. 15: eine schematische Perspektivansicht eines Rotationsfensters in dem die erfindungsgemäße Isolierverglasung zur Anwendung kommt;
- Fig. 16: schematische Ansichten der Stellungen eines weiteren Rotationsfensters; und
- Fig. 17 bis 19: schematische Darstellungen weiterer Ausführungsformen erfindungsgemäßer Formkörper.

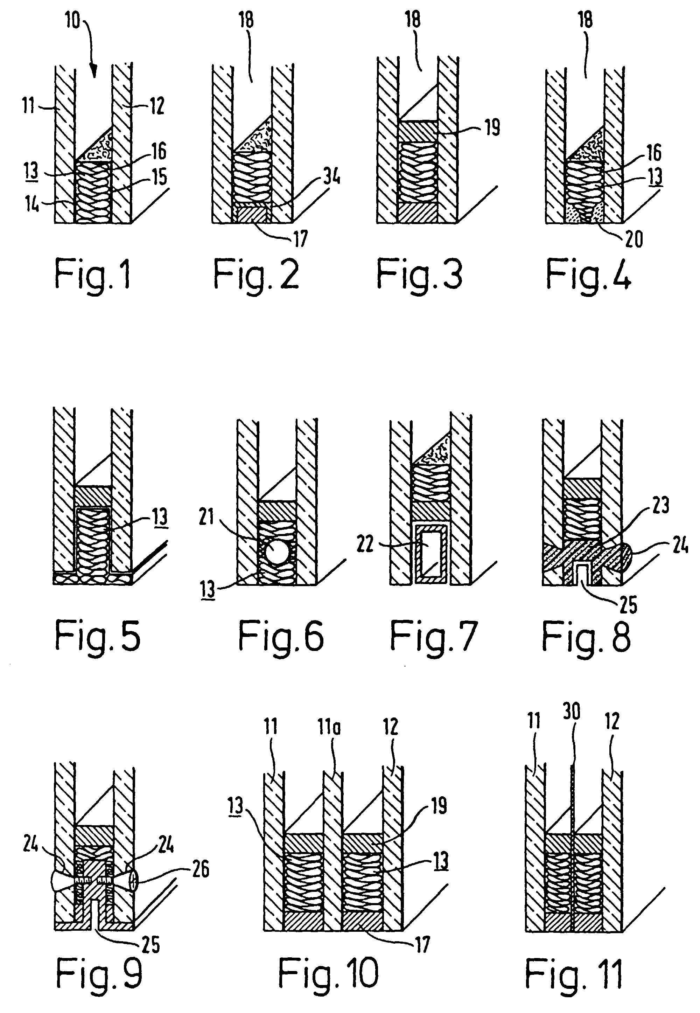

Bei der in Fig. 1 gezeigten Ausführungsform besteht das Isolierglaselement 10 aus zwei in einem Abstand voneinander angeordneten transparenten Scheiben oder Platten 11, 12, insbesondere Glasscheiben. Die beiden Scheiben sind an ihrem Rand umlaufend mittels eines textilen Abstandsgewebes 13 kraftschlüssig miteinander verbunden. Das Abstandsgewebe weist zwei Decklagen 14, 15 auf, die jeweils parallel zu den Scheibenflächen verlaufende, gewebte oder gewirkte Fäden enthalten. Die Decklagen sind über eine hier nicht dargestellte Harzschicht mit den Scheiben 11, 12 und durch quer zu den Scheiben verlaufende Filamente oder Stegfäden 16 miteinander verbunden. Die Stegfäden kreuzen einander und können ganz oder teilweise von einer Harzschicht umgeben sein. Durch die Harzumantelung werden die Stegfäden zu starren, biegesteifen Verstrebungen, die einen hohen Elastizitätsmodul aufweisen. Im ausgehärteten Zustand bildet daher das harzgetränkte textile Abstandsgewebe 13 einen Formkörper, der sich durch eine hochelastische, nach allen Richtungen belastbare Struktur auszeichnet. Im Verbund mit den beiden Scheiben 11, 12 wird, wenn der Formkörper 13 randumlaufend angeordnet wird, ein formstabiler, verwindungssteifer und selbsttragender Plattenkörper erhalten.

Die in Fig. 2 gezeigte Ausführungsform weist zusätzlich einen Dichtungssteg 17 zur diffusionsdichten Abdichtung des Scheibenzwischenraums 18 auf. In vorteilhafter Weise braucht man bei dem erfindungsgemäßen Isolierglaselement für die Versiegelung keine hochelastischen Dichtstoffe zur Aufnahme der Verformungskräfte der Glasscheiben zu benutzen, sondern kann solche Dichtstoffe verwenden, die optimale Eigenschaften bezüglich Diffusionsdichte, Wärmedämmung und Glashaftung aufweisen.

So kann man dann in empfehlenswerter Weise den Versiegelungssteg 17 auf der dem Innenraum zugewandten oder abgewandten Seite einschließlich beider Seitenflanken hälftig mit einer dünnen Aluminiumfolie 34 kaschieren, die über die seitlich an den Glasscheiben anliegenden Flächen mittels eines diffusionsdichten Klebers an die Glasscheiben fest anbindet. Vorzugsweise sollte die senkrecht zum Scheibenzwischenraum liegende mittlere Folienfläche faltig ausgebildet sein.

Der Scheibenzwischenraum kann dann zumindest teilweise evakuiert oder mit einem wärmedämmenden Material, vorzugsweise einem Gas oder Edelgas, gefüllt werden. Der Dichtungssteg wird bevorzugt außenseitig zum Abstandsgewebeband zu legen sein, so daß der Hohlraum des Abstandsgewebes, zum Volumen des Glaszwischenraums zugehörig, mit der gleichen Gasfüllung versehen werden kann. Zur Absicherung der Scheibendichtung kann aber auch ein zusätzlicher Dichtungssteg 19 innenseitig an das Abstandsgewebeband zum Scheibenzwischenraum 18 hin verlegt werden. Eine derartige Ausführungsform ist in Fig. 3 gezeigt.

In vorteilhafter Weise kann die Abdichtung des Scheibenzwischenraums 18 durch den Gewebestreifen 13 selbst erfolgen, und zwar durch eine Anordnung der Stegfäden 16 mit einer zum Scheibenrand hin zunehmenden Dichte und durch außenseitig auf die Stegfäden aufgebrachtes Harzmaterial 20 unter Einbeziehung von eingelagerten Detergentien. Eine derartige, in Fig. 4 dargestellte Maßnahme wäre auch als zusätzliche Abdichtung von Vorteil. In diesem Zusammenhang wird vorgeschlagen, das für die Randversteifung von Isolierglasscheiben vorgesehene Abstandsgewebematerial speziell in den benötigten Bandbreiten anzufertigen, wobei die Bänder bevorzugt randseitig mit einer größeren Stützfadendichte und/oder dichteren längsgerichteten Fadenstrukturen auszurüsten wären.

Solche Bänder können vorzugsweise bereits in einem durchlaufenden Prozeß mit Harzschlichten versehen, durch Zufuhr von Energie, insbesondere von Wärmeenergie, schnell ausgehärtet und zu montagefähigen Abstandsleisten vorgefertigt werden.

Die rigiden Gewebestrukturleisten werden dann zu den jeweils erforderlichen Längenmaßen zugeschnitten und danach randseitig umlaufend in abstandsgebender Weise zwischen die Scheiben eingelegt und klebend mit den Scheiben verpreßt. Die Verklebung kann auch durch in der Presse anschmelzende Harzschlichten erfolgen.

In vorteilhafter Weise kann die Verklebung der Leisten beidseitig über bereits während des Fertigungsprozesses auf die Abstandsleisten aufgebrachte Klebefolien erfolgen. Bevorzugt können hier transluzente, lichtstreuende Folien zur optischen Abdeckung der Innenstruktur der Leisten Verwendung finden. Auch farbig getönte, transluzente Folienbänder mit entsprechendem Design sind möglich.

Bezüglich der vorgefertigten Gewebestrukturleisten wird ferner vorgeschlagen, solche Leisten durch entsprechende Formwerkzeuge auch in Form eines T-Profils zu fertigen. Bei der in Fig. 5 gezeigten Ausführungsform ist der Steg des T-förmigen Formkörpers zwischen den Scheiben angeordnet und die Schenkel des T-förmigen Formkörpers übergreifen die Außenkanten der Scheiben. Die umlaufende Einbindung der Glaskanten durch ein solches Rahmenprofil trägt zur Randstabilität und zur Sicherung der Abdichtung des Plattenkörpers bei. Die randumlaufende Anordnung eines Abstandsgewebes 13 in Form eines T-Profils stellt insbesondere einen geeigneten Kantenschutz für das Isolierglaselement dar.

Die Herstellung derartiger vorgefertigter Gewebestrukturleisten erfolgt zweckmäßig in einem durchlaufenden Prozeß nach der Imprägnierung der Abstandsgewebe und vor ihrer vollständigen Aushärtung in der Weise, daß die teilweise ausgehärteten Abstandsgewebe ein formprägendes Werkzeug durchlaufen. Des weiteren können die so vorgefertigten Abstandsleisten in einem Arbeitsgang auf mindestens einer Decklage mit einer Klebebeschichtung und auf mindestens einer der Seitenflächen mit einem anhaftenden Dichtungssteg versehen werden.

Übliche Fensterkonstruktionen orientieren sich am Öffnungsmechanismus von Türen. Der Fensterflügel wird an einer Seitenkante über Scharniere an die Außenfront des Blendrahmens angeschlagen. Bei dieser längsseitigen Aufhängung, das Wort Flügel impliziert bereits diese einseitige Aufhängung, entstehen durch das Eigengewicht des Flügels nach Art eines Hebelarms je nach Länge des Flügels im oberen Bereich des Flügelelements im Bereich der Aufhängemechanik des Elements erhebliche Zuglasten, aber auch Drucklasten im unteren Bereich.

Bei der Ausführungsform gemäß Fig. 6 ist daher eine zusätzliche versteifende Verfestigung des seitlichen Gewebebandes etwa mittels eines in das Abstandsgewebeband 13 integrierten Rohrkörpers 21 vorgesehen, wobei der Rohrkörper mindestens in einem Abschnitt des Abstandsgewebes kraftschlüssig eingebettet ist und sich in dessen Längsrichtung erstreckt.

In vorteilhafter Weise kann der Rohrkörper 21 zugleich als Schwenklager für die Aufhängebänder dienen, und zwar in der Weise, daß der Rohrkörper über seine Länge einen runden Stab als Achse aufnimmt, der über die Rohrenden hinausragend an im Blendrahmen angebrachten Beschlagsvorrichtungen starr befestigt sein kann. Das Schwenken des Isolierglas-Fensterflügels erfolgt dann über die im Rohrkörper gelagerte und am Blendrahmen angeschlagene Achse. Ebenso kann der Stab im Rohrkörper starr befestigt und im Blendrahmen beweglich gelagert sein.

Eine konstruktive Versteifung des Scheibenelements 10 zur Befestigung der Schwenkbänder kann auch, wie in Fig. 7 dargestellt, über wenigstens ein biegesteifes Hohlprofilband 22 erfolgen, das wie der Rohrkörper 21 in dem Formkörper 13 angeordnet ist. Sowohl für die versteifende Integration eines Rohrkörpers 21 als auch für die eines Hohlprofilbandes 22 sollte vornehmlich bei seitig aufgehängten Fensterflügeln in Anbetracht der hier wirkenden Hebelkräfte eine zusätzliche kraftschlüssige Verkoppelung der Scheiben über eine Verschraubung oder Vernietung über paßforme Lochbohrungen erfolgen. Bei der in Fig. 8 gezeigten Ausführungsform erfolgt die kraftschlüssige Verkoppelung in rationeller Weise durch eine viskose Klebemasse 23, die auch in die hinterschnittenen Lochbohrungen 24 der Scheiben beidseitig eingedrückt wird. Die Aufhängescharniere 25 können ebenfalls verklebend in die viskose Klebemasse 23 eingebettet werden. Nach Aushärtung der Klebemasse 23 erzielt man eine durchaus kraftschlüssige Verkoppelung der Scheiben 11, 12.

Der Vorteil dieser Verkoppelung der Scheiben über viskos eingebrachte, aushärtende formsteife Kunststoffkörper mit hoher Shore-Härte liegt vor allem in der Elastizität dieser Körper und ihrer paßformen Anbindung an die Wandflächen der Bohrungen, wodurch lokale bzw. punktförmige Belastungen des Scheibenkörpers im Umfeld der Lochbohrungen ohne den sonst üblichen Gebrauch von Schutzhülsen und elastischen Trennscheiben vermieden werden können.

Bei der in Fig. 9 gezeigten Ausführungsform werden die Aufhängescharniere 25 über paßforme Lochbohrungen 24 mittels Senkkopfschrauben 26 befestigt. Auch hier wird durch die Verschraubung eine zusätzliche kraftschlüssige Verkoppelung der Scheiben 11 und 12 erreicht.

Für das erfindungsgemäße Isolierglaselement stellt dann, infolge der beschriebenen form- und kraftschlüssigen sowie biegesteifen Verfestigung des Scheibenkörpers, die Darstellung von Fensterflügelkonstruktionen dieser konservativen Art mit an seitlich angeordneten Bändern aufgehängten Fensterflügeln kein sonderliches Problem dar. Die kraftschlüssige Verkoppelung beider Scheiben erlaubt Lastaufnahmen, die über die Tragfähigkeit üblicher Rahmenkonstruktionen hinausgehen.

In besonderem Maße vorteilhaft erweist sich jedoch die Anwendung rahmenloser Isolierglaselemente bei Fensterkonstrukten mit Wende- oder Rotationsflügeln, wobei die rahmenlosen Glaselemente um eine ihrer Mittelachsen schwenkbar mittig im Blendrahmen gelagert werden. Die Gewichtslast des Scheibenelements wird hier achsensymmetrisch über den Drehpunkt auf den in das Mauerwerk integrierten Blendrahmen abgeleitet. Durch die innerhalb des Blendrahmens erfolgte Aufhängung des Drehflügels kann die Scheibe in Ruhestellung durch langflächiges Aufsetzen auf den Falz der unteren Strebe des Blendrahmens in sich spannungsfrei gehalten werden.

Das Lager- oder das Bolzenelement für die Drehbeschläge kann vorzugsweise in Form einer biegesteifen Schiene zwischen den Scheiben symmetrisch zur Mittelachse der Scheiben in das Abstandsgewebe quer zu dessen Längsrichtung kraftschlüssig integriert werden. Über symmetrisch zur Mittelachse paßförmig an beiden Scheiben angeordnete Lochungen kann das Lagerelement, wie im Zusammenhang mit den Figuren 8 und 9 schon erläutert, über die angrenzenden, die Scheibenflächen penetrierenden Vernietungen oder Verschraubungen mit dem Plattenkörper zusätzlich verbunden werden.

Der im Blendrahmen rotierbare Fensterflügel wird in Ruhestellung durch einen mittig aus dem Blendrahmen umlaufend vorgetriebenen Verschlußrahmen gesichert und abgedichtet. Der vorgetriebene Verschlußrahmen umgreift dabei den gläsernen Fensterflügel oder er greift in einen von den Scheibenkanten gebildeten Falz ein. Um den flächensteifen Glasplattenkörper verwindungsfest zu verriegeln, reicht bei einem umlaufenden Verschlußrahmen bereits ein Vorschub von 3 bis 5 mm aus.

Durch eine jalousieartige Ausführung der Eckverbindungen des Verschlußrahmens erreicht man bei der Vorschub-Verriegelung einen hinreichend wind- und schlagregendichten Verschluß zwischen dem Glasscheibenflügel und dem Blendrahmen, auch in den Eckbereichen.

Einfachheitshalber kann die Abdichtung auch durch im Blendrahmen oder im Fensterflügel umlaufend angebrachte elastische Dichtlippen erfolgen und die mechanische Verriegelung durch einen zusätzlichen Bolzenmechanismus sichergestellt werden. Die Aufnahmevorrichtungen für die vom Blendrahmen her eingreifenden Bolzen werden randseitig in das Abstandsgewebe integriert und dort mittels der Klebeharze kraftschlüssig verfestigt. Wie im Falle der Drehbeschläge können bei Beschlägen aller Art zusätzliche Verfestigungen durch Bolzungen über Lochbohrungen an den anliegenden Scheiben erfolgen.

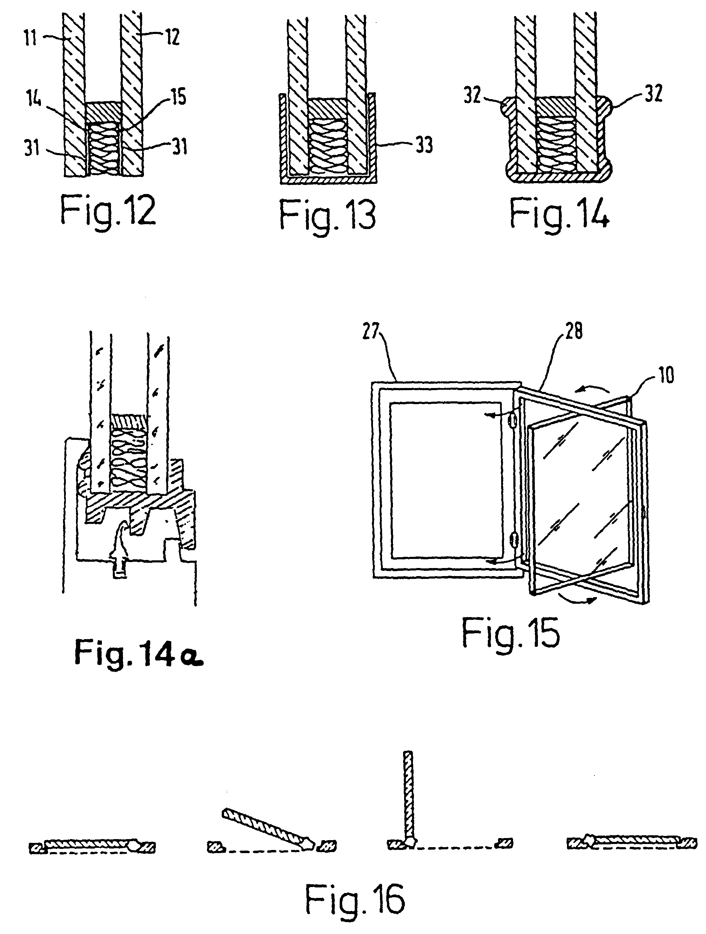

Als eine weitere Ausführungsform, die gleichfalls eine Rotation oder ein Wenden des erfindungsgemäßen Scheibenelements um eine seiner Mittelachsen ermöglicht, wird die in Fig. 15 gezeigte Anordnung vorgeschlagen. Das Scheibenelement 10 ist dabei nicht im Blendrahmen 27, sondern mit der Schwenkmechanik in einem aufklappbaren Fensterflügel 28 üblicher Bauart integriert. Der Blendrahmen 27 wird dabei in der Weise ausgeführt, daß seine Anschlagleisten beim Schließen des Fensterflügels 28 umlaufend den Rand des rahmenlosen Scheibenelements 10 überragen. Das Scheibenelement wird dann beim Schließen des Fensters gegen eine innenseitig an der oberen Kante der Anschlagleisten des Blendrahmens umlaufend angeordnete Dichtprofilleiste gedrückt.

Bei dieser Art der Fensterkonstruktion entfällt die vorstehend beschriebene Anordnung der Dichtungs- und Verschlußmechaniken im Blendflügel. Der Vorteil dieser Konstruktion liegt in der Möglichkeit, solche Fenster unabhängig von der Wendbarkeit der Glasfläche als Kipp- und Wendefenster mit geläufigen Beschlagsvarianten auszurüsten, wobei die Beschlagsmechanik wie üblich vom Flügelrahmen aufgenommen werden kann.

Insbesondere ist die thermische Qualität solcher Fenster als vorteilhaft zu werten. Der bei Isolierglasscheiben übliche erhöhte Wärmedurchgang im Randbereich der Scheiben kann hier gänzlich vermieden werden, da der Randbereich des rahmenlosen Isolierglaselements 10 dem Blendrahmen 27 raumseitig anliegt.

Als vorteilhaft ist ebenfalls anzuführen, daß ein ungerahmtes Isolierglaselement als rotierbarer Fensterflügel im Falle der Lagerung in einem Flügelrahmen nur zwei Drehlagerelemente als in den Scheibenrand einzubindende Beschlagseinrichtungen aufzunehmen braucht.

Die Schwenkbarkeit von Isolierglasscheiben um 180 ° bei Fenster- und Fassadenkonstrukten genereller Art, die sich mittels der erfindungsgemäßen rahmenlosen Isolierglaselemente in vorteilhafter Weise verwirklichen lassen, verleiht solchen Konstrukten eine erweiterte Qualität. Rüstet man ein Isolierglaselement mit einer vornehmlich den langwelligen Bereich der Sonnenstrahlung absorbierenden Scheibe und einer auf ihrer dem Scheibenzwischenraum zugewandten Oberfläche aufgebrachten emissionsarmen Beschichtung, einer sogenannten "Low-E-Beschichtung" aus, so wirkt das Isolierglaselement mit der Absorptionsscheibe, die im Sommer der einstrahlenden Sonne zugewandt wird, als effektives Sonnenschutzglas mit einer Minderung der solaren Energietransmissionswerte um bis zu 40 %. In Winterposition dagegen, in der die Absorptionsscheibe um 180 ° gewendet raumseitig positioniert ist, stellt dieses Element einen hocheffizienten Solakollektor dar, der dem Raum unmittelbar, fast verlustlos, die auftreffende solare Strahlung als Wärme zuführt.

Die Schwenkbarkeit von Fensterflügeln um 180 ° kann in bekannter Weise auch mittels eines anderen mechanischen Prinzips erfolgen, und zwar durch eine Schwenkung des Flügels bei gleichzeitiger Verlagerung der Randachsen und deren Anschlag von einer Blendrahmenseite zur anderen Seite. Dieses Prinzip ist in Fig. 16 anhand verschiedener Positionen des Fensterflügels gezeigt. Der Fensterflügel wird hier über Bolzungen der Randachsen anhand entsprechender im oberen und unteren Blendrahmenfalz befestigter Profilleisten geführt. Als mechanisch vorteilhaft erweist sich dabei eine Führung des Fensterflügels über rotierende Zahnräder, die in entsprechende im Blendrahmenfalz befestigte Profilleisten eingreifen.

Wegen der auftretenden Kippmomente kann in mechanisch perfekter Weise die Führung des Fensterflügels in den Führungsleisten nur dann erfolgen, wenn die Rotation der Zahnräder synchron verläuft, d. h., wenn die Zahnräder über eine starre Achse miteinander verbunden sind.

Zur Verwirklichung einer derartigen Ausführungsform wird daher vorgeschlagen, für die Lagerung der die Zahnräder starr verbindenden Achse ein Rohr aus einem biegesteifen Material zu wählen, und dieses Rohr innerhalb der Glasscheibe als den Glaskörper versteifende und tragende Rahmenleiste zu nutzen. Die Integration eines derartigen Rohrkörpers in den Glaskörper wurde bereits im Zusammenhang mit der Anschlagsmechanik von Fenstern üblicher Bauart anhand von Fig. 6 beschrieben.

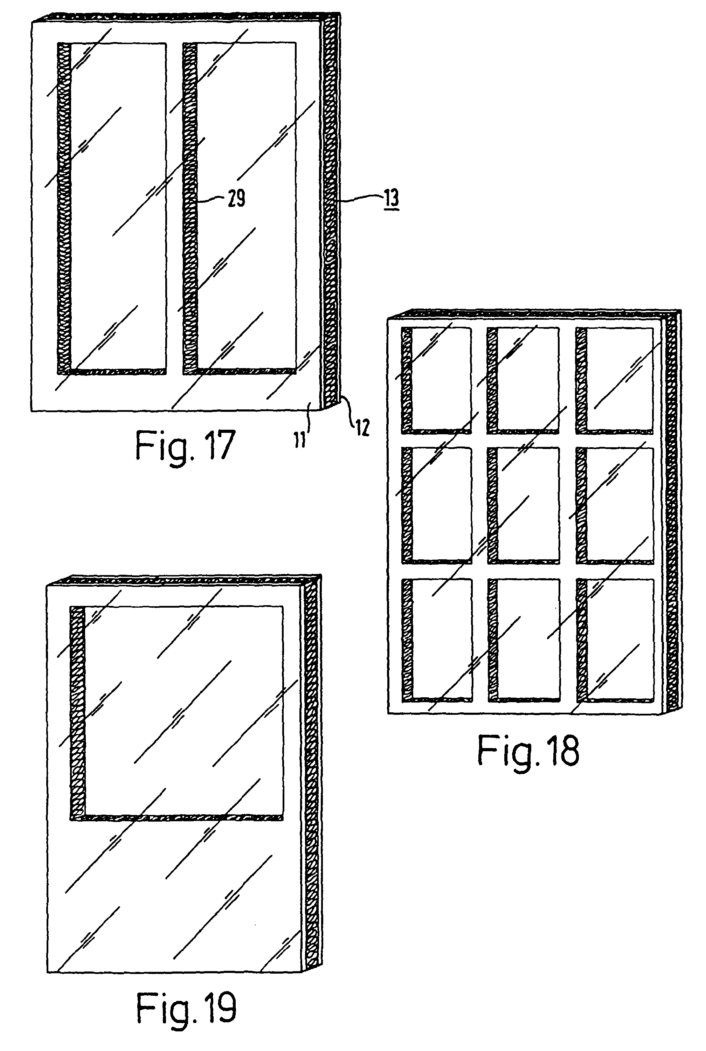

Ein die Achse aufnehmendes biegesteifes Rohr kann in statisch vorteilhafter Weise auch die Drehachse von über die Mittelachse schwenkbaren rahmenlosen Fensterflügeln aufnehmen. Das Rohr wird hier mittig in ein in das Scheibenelement einzubringendes Abstandsband eingebettet. Die Fig. 17 zeigt schematisch einen Formkörper mit einem randumlaufenden Abstandsgewebe 13, der zusätzlich ein Abstandsband 29 aufweist, welches sich entlang einer Mittelachse der Scheiben erstreckt. Ein solches mittig zwischen den Scheiben zusätzlich eingebrachtes, mit den Scheiben 11, 12 kraftschlüssig verfestigtes und als Sprosse kaschiertes Abstandsband 29 kann insbesondere großflächigen Isolierglasscheiben zusätzliche Flächenstabilität verleihen.

Generell wird vorgeschlagen, Isolierglasfenster mit im Scheibenzwischenraum eingelegten Sprossengerüsten mit über die Flächenausdehnung der Scheiben verteilten Sprossen so zu gestalten, daß diese Gerüste in vorteilhafter Weise durch Bänder aus Abstandsgewirken 13 gebildet werden. Ein für derartige Ausführungsformen geeigneter Formkörper ist in Fig. 18 gezeigt. Man erreicht dadurch nicht nur eine höhere Festigkeit und Biegesteifigkeit des Glaselements, sondern auch infolge der lichten Struktur der Abstandsgewebe, gegenüber der Ausrüstung mit opaken Leisten, einen höheren Lichteinfall und einen geringeren Wärmedurchgang.

Im Falle eines geschoßhohen Fensterflügels kann zur Verstärkung der Stabilität des Glaselements gemäß Fig. 19 der untere Teil des Flügels als ein mit einem massiven Rahmen versehenes Brüstungselement ausgebildet werden. In vorteilhafter Weise ist dabei der randumlaufende Formkörper im Bereich der unteren und/oder oberen Scheibenkante breiter als in den seitlichen Bereichen ausgebildet.

Bei der in Fig. 10 gezeigten Ausführungsform sind mittels randumlaufender Abstandsbänder 13 drei Scheiben 11, lla, 12 zu einem selbsttragenden stabilen Plattenkörper verbunden. Die Randabdichtung kann, wie vorstehend bereits beschrieben, über Dichtungsstege 17, 19 erfolgen. Die Konzeption der Randbefestigung über Abstandsgewebebänder zwischen den jeweiligen Glasscheiben eignet sich in besonderem Maße zum Aufbau mehrschichtiger Plattenkörper. Bei der in Fig. 11 gezeigten Ausführungsform wird die Möglichkeit genutzt, zwischen den zwei Scheiben 11, 12 eines Isolierglaselements statt einer zusätzlichen Glasscheibe eine Kunststoffplatte oder eine Kunststoffolie 30 anzuordnen, um auf diese Weise die thermischen Vorteile eines dreischeibigen Isolierglaselements bei geringer Gewichtszunahme zu nutzen. Die Kunststoffolie 30 wird dabei mittels zweier gegenüberliegender Decklagen der den Formkörper bildenden textilen Abstandsgewirke kraftschlüssig mit den Scheiben in Verbund gebracht.

Verfahrenstechnisch wird in diesem Fall zunächst auf einer der Glasscheiben randumlaufend eine Lage des Abstandsgewebes aufgebracht. Es folgt ein klebendes Aufspannen der Folie auf dieses umlaufende Gewebeband. Auf den Randbereich der Folie wird dann eine zweite Gewebebandauflage zur Aufnahme der Deckscheibe klebend verfestigt aufgelegt.

Ferner ist es möglich, aus Gründen eines ansprechenden Designs, die Deckgläser 11, 12 innenseitig mit einer randumlaufenden aufgedruckten Keramikmaske 31 zu versehen. Eine derartige Ausführungsform ist in Fig. 12 gezeigt. Ein solcher Maskendruck unterstützt gleichzeitig das sichere Haften der Gewebedecklagen 14, 15 an den Glasscheiben 11, 12 und stellt außerdem einen UV-Schutz für die verwendeten Harzklebeschichten dar. Die in den Figuren 13 und 14 gezeigten Maßnahmen betreffen einen verbesserten Kantenschutz des Isolierglaselements und führen zu einer zusätzlichen Abdichtung zum Blendrahmen hin. Zum einen sind beidseitig randumlaufende Profilbänder 32 oder beide Scheiben abdeckende U-Profilleisten 33 aus Kunststoffmaterial oder dünnem Holz- bzw. Aluminiummaterial auf das Scheibenelement aufzubringen.

Zum anderen kann ein solches Kantenschutz- oder Dichtprofilband in rationeller Fertigungstechnik aus einem aushärtenden Kunststoffmaterial bestehen, das mittels einer Formdüse randseitig umlaufend nach bekannter Technik auf den Scheibenkörper aufextrudiert wird, wobei die Eckverbindungen durch Preßformung eine Nachbesserung erfahren.

In vorteilhafter Weise können die Profilleisten, insbesondere im Bereich der unteren Scheibenkante, so ausgebildet werden, daß sie, den Falzformungen heutiger Flügelrahmen entsprechend, paßgerechte Formungen für die im Blendrahmen teilweise mehrfach angelegten Wind- und Regensperren aufweisen. Eine derartige Ausführungsform ist in Fig. 14a gezeigt. In diesem Fall können die bestehenden Falzformungen heutiger Blendrahmen erhalten bleiben. Insbesondere bei der Um- oder Nachrüstung von herkömmlichen Fenstern mit den erfindungsgemäßen Fensterflügeln wird damit ein erheblicher Vorteil erzielt.

Selbstverständlich können für die Scheibenplatten 10, 12 des Isolierglaselements neben den üblichen Floatgläsern auch vorgespannte oder teilvorgespannte Gläser und Verbundsicherheitsgläser, letztlich auch transparente Kunststoffscheiben Verwendung finden. Im Falle der Ausstattung des Elements mit absorbierenden Farbgläsern oder mit Gläsern, die mit absorbierenden Schichten versehen sind, wird empfohlen, vornehmlich vorgespannte oder teilvorgespannte Gläser zu verwenden.

## Patentansprüche

1. Isolierverglasung mit mindestens zwei parallel zueinander angeordneten Scheiben, die durch einen randumlaufenden Abstandhalter miteinander verbunden sind, dadurch gekennzeichnet, daß der Abstandhalter von einem Formkörper gebildet ist, der eine Vielzahl von elastischen, biegesteifen und einander kreuzenden Filamenten aufweist, die quer zu den Ebenen der Scheiben verlaufen und eine kraftschlüssige Verstrebung zwischen den Scheiben bilden.

2. Isolierverglasung nach Anspruch 1, dadurch gekennzeichnet, daß zumindest ein wesentlicher Anteil der einander kreuzenden Filamente an den Kreuzungsstellen miteinander verbunden ist.

3. Isolierverglasung nach Anspruch 1 oder 2, dadurch gekennzeichnet, daß die Filamente in einer Dichte von zwischen etwa 10 bis 60 Filamenten pro cm² angeordnet sind.

4. Isolierverglasung nach einem der vorstehenden Ansprüche, dadurch gekennzeichnet, daß der Formkörper aus einem textilen Abstandsgewebe gebildet ist, das aus wenigstens zwei Decklagen und die Filamente bildenden Stegfäden zusammengesetzt ist, wobei die Stegfäden durch Imprägnieren mit Harz aufgerichtet und versteift sind.

5. Isolierverglasung nach Anspruch 4, dadurch gekennzeichnet, daß das Harz ausgewählt ist aus der Gruppe bestehend aus Epoxid-, Polyurethan-, Phenol- und Polyesterharzen oder deren Mischungen.

6. Isolierverglasung nach einem der vorstehenden Ansprüche, dadurch gekennzeichnet, daß der Formkörper aus Glas-, Kunststoff- oder Kohlenstoffasern oder aus deren Mischungen zusammengesetzt ist.

7. Isolierverglasung nach Anspruch 6, dadurch gekennzeichnet, daß der Formkörper aus Glasfasern zusammengesetzt ist, die mit Silanschlichten versehen sind.

8. Isolierverglasung nach Anspruch 6 oder 7, dadurch gekennzeichnet, daß die Glas-, Kunststoff- oder Kohlenstoffasern wenigstens teilweise aus Hohlfasern gebildet sind.

9. Isolierverglasung nach einem der vorstehenden Ansprüche, dadurch gekennzeichnet, daß die Filamente mit Harzschlichten graduierter Dichte versehen sind, die ihnen die Eigenschaft eines verlustarmen Lichtleiters verleihen.

10. Isolierverglasung nach einem der vorstehenden Ansprüche, dadurch gekennzeichnet, daß die Filamente eine mittlere Feinheit im Bereich von 20 bis 80 tex aufweisen.

11. Isolierverglasung nach einem der vorstehenden Ansprüche, dadurch gekennzeichnet, daß der Abstandhalter außenseitig von einem zwischen den Scheiben angeordneten Dichtungssteg umgeben ist.

12. Isolierverglasung nach Anspruch 11, dadurch gekennzeichnet, daß zwischen den Scheiben ein weiterer Dichtungssteg innenseitig an den Abstandhalter angelegt angeordnet ist.

13. Isolierverglasung nach einem der Ansprüche 1 bis 10, dadurch gekennzeichnet, daß die Filamente mit zum Rand hin zunehmender Dichte angeordnet sind und der Scheibenzwischenraum durch eine außenseitig auf die Filamente aufgebrachte Harzschicht abgedichtet ist.

14. Isolierverglasung nach einem der vorstehenden Ansprüche, dadurch gekennzeichnet, daß der Formkörper mittels lichtdurchlässiger Klebefolien an den Scheiben befestigt ist.

15. Isolierverglasung nach einem der vorstehenden Ansprüche, dadurch gekennzeichnet, daß der Formkörper im Querschnitt T-förmig ausgebildet ist, wobei der Steg des T-förmigen Formkörpers zwischen den Scheiben angeordnet ist und die Schenkel des T-förmigen Formkörpers die Außenkanten der Scheiben übergreifen.

16. Isolierverglasung nach einem der vorstehenden Ansprüche, gekennzeichnet durch ihre Verwendung als rahmenloses Fenster-, Wand-, Dach-, Tür- oder Brüstungselement.

17. Isolierverglasung nach Anspruch 16, dadurch gekennzeichnet, daß wenigstens ein Rohrkörper in mindestens einem Abschnitt des Formkörpers sich in dessen Längsrichtung erstrekkend kraftschlüssig eingebettet ist.

18. Isolierverglasung nach Anspruch 17, dadurch gekennzeichnet, daß der Rohrkörper über wenigstens einen Teil seiner Länge einen Stab als Achse aufnimmt, der über die Enden des Rohrkörpers hinausragt.

19. Isolierverglasung nach Anspruch 16, dadurch gekennzeichnet, daß wenigstens ein Hohlprofilband in mindestens einem Abschnitt des Formkörpers sich in dessen Längsrichtung erstreckend kraftschlüssig eingebettet ist.

20. Isolierverglasung nach einem der Ansprüche 16 bis 19, dadurch gekennzeichnet, daß die Scheiben zusätzlich zu ihrer kraftschlüssigen Verbindung durch den Formkörper über eine Verschraubung oder Vernietung im Randbereich kraftschlüssig gekoppelt sind.

21. Isolierverglasung nach einem der Ansprüche 16 bis 19, dadurch gekennzeichnet, daß die Scheiben im Randbereich zusätzlich zu ihrer kraftschlüssigen Verbindung durch den Formkörper über eine viskos in profilierte Durchgangsbohrungen der Scheiben eingebrachte, ausgehärtete Klebemasse kraftschlüssig gekoppelt sind.

22. Isolierverglasung nach einem der Ansprüche 16 bis 21, dadurch gekennzeichnet, daß die Isolierverglasung um 180 ° wendbar angeordnet ist.

23. Isolierverglasung nach einem der Ansprüche 16 bis 22, dadurch gekennzeichnet, daß die Isolierverglasung um eine der Mittelachsen der Scheibenfläche schwenkbar gelagert ist.

24. Isolierverglasung nach Anspruch 23, dadurch gekennzeichnet, daß wenigstens ein Lagerelement zwischen den Scheiben etwa in der Mitte der Flächenausdehnung derselben quer zur Längsrichtung des Formkörpers vorgesehen ist.

25. Isolierverglasung nach einem der Ansprüche 16 bis 24, dadurch gekennzeichnet, daß zwischen den Scheiben etwa in der Mitte der Flächenausdehnung derselben ein durch den Formkörper gebildetes Abstandsband eingebracht ist, der die Scheiben kraftschlüssig verbindet und sich entlang wenigstens einer der Mittelachsen der Scheiben erstreckt.

26. Isolierverglasung nach Anspruch 25, dadurch gekennzeichnet, daß daß wenigstens ein Rohrkörper in mindestens einem Abschnitt des Abstandsbands sich in dessen Längsrichtung erstreckend kraftschlüssig eingebettet ist.

27. Isolierverglasung nach einem der Ansprüche 16 bis 26, dadurch gekennzeichnet, daß im Scheibenzwischenraum ein Sprossengerüst mit über die Flächenausdehnung der Scheiben verteilten Sprossen eingelegt ist, die jeweils durch einen Formkörper gebildet sind.

28. Isolierverglasung nach einem der Ansprüche 16 bis 27, dadurch gekennzeichnet, daß wenigstens drei Scheiben mittels randumlaufender Formkörper zu einem Plattenkörper verbunden sind.

29. Isolierverglasung nach einem der Ansprüche 16 bis 27, dadurch gekennzeichnet, daß zwischen den Scheiben eine Kunststoffplatte oder eine Kunststoffolie angeordnet ist, die mittels zweier einander gegenüberliegender Formkörper kraftschlüssig mit den Scheiben in Verbund gebracht ist.

30. Isolierverglasung nach einem der Ansprüche 16 bis 27, dadurch gekennzeichnet, daß der randumlaufende Formkörper in seinem unteren und/oder oberen Bereich breiter als in den seitlichen Bereichen ist.

31. Isolierverglasung nach einem der Ansprüche 16 bis 30, dadurch gekennzeichnet, daß die Scheiben innenseitig mit einer randumlaufenden aufgedruckten Keramikmaske versehen sind.

32. Isolierverglasung nach einem der Ansprüche 16 bis 30, dadurch gekennzeichnet, daß randumlaufende Profilbänder oder beide Scheiben abdeckende U-Profilleisten aus Kunststoff, Holz oder Aluminium außenseitig auf den Scheiben aufgebracht sind.

33. Isolierverglasung nach Anspruch 32, dadurch gekennzeichnet, daß die Profilbänder mindestens im Bereich der unteren Scheibenkante paßgerechte Formungen für im Blendrahmen angeordnete Regen- und Windsperren aufweisen.

34. Isolierverglasung nach einem der Ansprüche 16 bis 33, dadurch gekennzeichnet, daß mindestens eine der Scheiben aus vorgespanntem oder teilvorgespanntem Glas, Verbundsicherheitsglas oder aus transparentem Kunststoff besteht.

35. Isolierverglasung nach einem der Ansprüche 16 bis 34, dadurch gekennzeichnet, daß eine der Scheiben strahlungsabsorbierend ausgerüstet ist.

36. Isolierverglasung nach Anspruch 35, dadurch gekennzeichnet, daß wenigstens die strahlungsabsorbierend ausgerüstete Scheibe auf ihrer dem Scheibenzwischenraum zugewandten Oberfläche eine Low-E-Beschichtung aufweist.

37. Verfahren zur Herstellung einer rahmenlosen Isolierverglasung, dadurch gekennzeichnet, daß auf den Rand einer ersten Scheibe umlaufend ein mit Harz getränktes Abstandsgewebe aus wenigstens zwei einander gegenüberliegenden Decklagen und quer zur Flächenausdehnung der Decklagen verlaufenden Stegfäden aufgelegt, die zweite Scheibe paßformgerecht aufgelegt und der entstehende Schichtkörper in einer Preßform zusammengedrückt wird, so daß die Glasscheiben umlaufend randseitig an die Decklagen des Gewebes klebend anbinden, wonach die Preßform geöffnet wird, die Stegfäden sich aufrichten und das Harz ausgehärtet wird.

38. Verfahren nach Anspruch 37, dadurch gekennzeichnet, daß die Preßform kalibrierend geöffnet wird, bis der gewünschte Abstand zwischen den Scheiben erreicht wird.

39. Verfahren zur Herstellung rahmenloser Isolierverglasungen, dadurch gekennzeichnet, daß ein textiles Abstandsgewebe aus wenigstens zwei einander gegenüberliegenden Decklagen und quer zur Flächenausdehnung der Decklagen verlaufenden Stegfäden mit Harz imprägniert und wenigstens teilweise ausgehärtet wird, und daß aus diesem Abstandsgewebe nach dem wenigstens teilweisen Aushärten montagefähige Formkörper vorgefertigt werden, die anschließend randseitig umlaufend in abstandsgebender Weise zwischen wenigstens zwei Scheiben eingelegt und klebend mit den Scheiben verbunden werden.

40. Verfahren nach Anspruch 39, dadurch gekennzeichnet, daß die Formkörper nach der Imprägnierung und vor ihrer endgültigen Aushärtung in einem durchlaufenden Prozeß (kontinuierlich) ein formprägendes Werkzeug durchlaufen.

41. Verfahren nach Anspruch 39 oder 40, dadurch gekennzeichnet, daß die Formkörper in einem Arbeitsgang auf mindestens einer Decklage des Abstandsgewebes mit einer Klebebeschichtung und auf mindestens einer der Seitenflächen mit einem anhaftenden Dichtungssteg versehen werden.

## Claims

1. An insulating glazing unit comprising at least two panes arranged in parallelism to each other and connected together by a marginally surrounding spacer, characterized in that the spacer is constituted by a shaped body which possesses a plurality of elastic, flexurally rigid and mutually intersecting filaments, which extend transverse in relation to the plane of the panes and form a force transmitting buttressing means between the panes.

2. The insulating glazing unit as claimed in claim 1, characterized in that at least in a substantial portion of the mutually intersecting filaments such filaments are connected with each other.

3. The insulating glazing unit as claimed in claim 1 or in claim 2, characterized in that the filaments are arranged with a density of approximately 10 to 60 filaments per square centimeter.

4. The insulating glazing unit as claimed in any one of the preceding claims, characterized in that the shaped body is constituted by a textile spacer fabric, which is made up of at least two covering layers and rib fibers constituting the filaments, the rib fibers being erected and stiffened by impregnation with resin.

5. The insulating glazing unit as claimed in claim 4, characterized in that the said resin is selected from the group essentially including epoxy, polyurethane, phenol and polyester resins and mixtures thereof.

6. The insulating glazing unit as claimed in any one of preceding claim, characterized in that the shaped body is made up of glass, synthetic resin or carbon fibers or mixtures thereof.

7. The insulating glazing unit as claimed in claim 6, characterized in that the shaped body is constituted by glass fibers, which are provided with silane sizes.

8. The insulating glazing unit as claimed in claim 6 or in claim 7, characterized in that the glass, synthetic resin or carbon fibers are constituted at least partly of hollow fibers.

9. The insulating glazing unit as claimed in any one of the preceding claims, characterized in that the filaments are provided with resins sizes of graduated density, which endow them with the property of a low loss light guide.

10. The insulating glazing unit as claimed in any one of the preceding claims, characterized in that the filaments have a mean degree of fineness of 20 to 80 tex.

11. The insulating glazing unit as claimed in any one of the preceding claims, characterized in that the spacer is surrounded on the outside by a sealing rib arranged between the panes.

12. The insulating glazing unit as claimed in claim 11, characterized in that between the panes a further sealing rib is arranged on the inside on the spacer.

13. The insulating glazing unit as claimed in any one of the claims 1 through 10, characterized in that the filaments are arranged with a density increasing towards the edge and the intermediate space between the panes is sealed to the outside against the resin layer applied to the filaments.

14. The insulating glazing unit as claimed in any one of the preceding claims, characterized in that the shaped body is attached to the panes by means of transparent adhesive films.

15. The insulating glazing unit as claimed in any one of the preceding claims, characterized in that the shaped body is designed with a T-like cross section, the web of the T-like shaped body being arranged between the pane and the flanges of the T-like shaped body overlapping the outer edges of the panes.

16. The insulating glazing unit as claimed in any one of the preceding claims, characterized by the use thereof as a frameless window, wall, roof, door or parapet element.

17. The insulating glazing unit as claimed in claim 16, characterized in that at least one tubular body is embedded in a force transmitting fashion in at least one section of the shaped body and extending in the longitudinal direction thereof.

18. The insulating glazing unit as claimed in claim 17, characterized in that the tubular body receives for at least a part of its length a rod as a pivot shaft, which extends past the ends of the tubular body.

19. The insulating glazing unit as claimed in claim 16, characterized in that at least one hollow moulding band is embedded in a force transmitting fashion in at least one section of the shaped body so as to extend in the longitudinal direction thereof.

20. The insulating glazing unit as claimed in any one of the claims 16 through 19, characterized in that the panes, in addition to their force transmitting connection by means of the shaped body are coupled in a force transmitting manner in the edge part by screw or rivet means.

21. The insulating glazing unit as claimed in any one of the claims 16 through 19, characterized in that the panes, in addition to their force transmitting connection by means of the shaped body are coupled in a force transmitting manner by means of an adhesive composition in a cured state introduced while viscous into non-circular through holes in the panes.

22. The insulating glazing unit as claimed in any one of the claims 16 through 21, characterized in that the insulating glazing unit is able to be turned through 180°.

23. The insulating glazing unit as claimed in any one of the claims 16 through 22, characterized in that the insulating glazing unit is pivotally mounted for tilting about one of the middle axes of the pane surface.

24. The insulating glazing unit as claimed in claim 23, characterized in that at least one bearing element is provided between the panes generally in the middle of the extent of the area of the same transversely in relation to the longitudinal direction of the shaped body.

25. The insulating glazing unit as claimed in any one of the claims 16 through 24, characterized in that in the intermediate space between the panes and generally in the middle of the extent of the area of the same a space band is arranged constituted by the shaped body and which connects the panes in a force transmitting fashion and extends along at least one of the middle axes of the panes.

26. The insulating glazing unit as claimed in claim 25, characterized in that at least one tubular body is embedded in a force transmitting fashion in at least one section of the spacer band and extends in the longitudinal direction thereof.

27. The insulating glazing unit as claimed in any one of the claims 16 through 26, characterized in that in the intermediate space between the panes a muntin grid is arranged with glazing bars extending over the area of the panes, such bars respectively being constituted by a shaped body.

28. The insulating glazing unit as claimed in any one of the claims 16 through 27, characterized in that at least three panes are connected to constitute a single pane body by means of a surrounding shaped body arranged at the edge.

29. The insulating glazing unit as claimed in any one of the claims 16 through 27, characterized in that between the panes a plastic sheet or plastic film is arranged, which by means of two oppositely arranged shaped bodies is connected in a compound manner with the panes to have a force transmitting connection therebetween.

30. The insulating glazing unit as claimed in any one of the claims 16 through 27, characterized in that the lower and/or upper regions of the marginally surrounding shaped body are wider than the lateral regions thereof.

31. The insulating glazing unit as claimed in any one of the claims 16 through 30, characterized in that the panes are provided on the inside with a surrounding printed on ceramic mask arranged at the edge.

32. The insulating glazing unit as claimed in any one of the claims 16 through 30, characterized in that at the edge surrounding moulding bands with an U-like cross section of plastic, wood or aluminum are provided which are applied to the panes on the outside.

33. The insulating glazing unit as claimed in claim 32, characterized in that the moulding bands comprise matching shaped parts for rain and wind shields disposed in the outer stationary frame at least in the region of the lower pane edge.

34. The insulating glazing unit as claimed in any one of the claims 16 through 33, characterized in that at least one of the panes consists of toughened or partly toughened glass, composite safety glass or transparent plastic.

35. The insulating glazing unit as claimed in any one of the claims 16 through 34, characterized in that one of the panes is provided to be radiation absorbent.

36. The insulating glazing unit as claimed in claim 35, characterized in that at least the pane provided to be radiation absorbent has a low E coating on the surface thereof facing the intermediate space between the panes.

37. A method for the production of a frameless insulating glazing unit, characterized in that in a surrounding manner on the edge of a pane a resin impregnated spacer band comprising at least two oppositely arranged covering layers and, perpendicularly to the extent of the area of the covering layers, rib fibers is laid, the second pane is laid on with an accurate fit and the resulting laminate is compressed with an accurate fit in a pressing mold so that the panes are bondingly connected with the covering layers of the fabric with a surrounding arrangement and at the edge, whereafter the pressing mold is opened, the rib fibers erect themselves and the resin is cured.

38. The method as claimed in claim 37, characterized in that the pressing mold is opened a graduated amount until the desired distance between the panes is reached.

39. A method for the production of a frameless insulating glazing unit, characterized in that a textile spacer fabric comprises at least two mutually opposite covering layers and rib fibers extending transversely in relation to the extent of the area of the covering layers and is impregnated with resin and such resin cured and in that from such spacer fabric after curing shaped bodies are produced in a form ready for assembly, which are then connected together at the edge and in a surrounding manner and in a manner defining a distance apart are arranged between the at least two panes and are connected in a bonding manner with the panes.

40. The method as claimed in claim 39, characterized in that after the impregnation and prior to their final curing the shaped bodies pass through a shaping tool in a continuous process.

41. The method as claimed in claim 39 or in claim 40, characterized in that in one single operation the shaped bodies are provided with an adhesive coating on at least one covering layer of the spacer fabric and with an adhesive sealing rib on at least one of the side surfaces.

## Revendications

1. Vitrage isolant comportant au moins deux vitres disposées parallèlement l'une à l'autre et assemblées l'une avec l'autre par une pièce d'écartement située sur le pourtour, caractérisé en ce que la pièce d'écartement est formée par un corps moulé qui présente plusieurs filaments élastiques, rigides à la flexion, se croisant, qui sont transversaux par rapport aux plans des vitres et forment un entretoisement par adhérence entre les vitres.

2. Vitrage isolant selon la revendication 1, caractérisé en ce qu'au moins une part essentielle des filaments se croisant est assemblée aux points de croisement.

3. Vitrage isolant selon la revendication 1 ou 2, caractérisé en ce que les filaments sont disposés selon une densité de 10 à 60 filaments environ par cm².

4. Vitrage isolant selon l'une quelconque des revendications précédentes, caractérisé en ce que le corps moulé est réalisé dans un tissu textile d'écartement qui est composé au moins de deux couches extérieures et de fils à âme formant les filaments, les fils à âme étant rendus droits et étant raidis par imprégnation de résine.

5. Vitrage isolant selon la revendication 4, caractérisé en ce que la résine est sélectionnée dans le groupe se composant de résines époxydes, de polyuréthanne, phénoliques et polyesters ou de leurs mélanges.

6. Vitrage isolant selon l'une quelconque des revendications précédentes, caractérisé en ce que le corps moulé se compose de fibres de verre, synthétiques ou de carbones ou de leurs mélanges.

7. Vitrage isolant selon la revendication 6, caractérisé en ce que le corps moulé est formé de fibres de verre qui sont munies de colles de silane.

8. Vitrage isolant selon la revendication 6 ou 7, caractérisé en ce que les fibres de verre, synthétiques ou de carbone sont formées au moins en partie de fibres de bois.

9. Vitrage isolant selon l'une quelconque des revendications précédentes, caractérisé en ce que les filaments sont dotés d'une densité graduée de colles de résine qui leur confèrent la propriété d'un conduit de lumière à pertes réduites.

10. Vitrage isolant selon l'une quelconque des revendications précédentes, caractérisé en ce que les filaments présentent une finesse moyenne comprise dans la plage de 20 à 80 tex.

11. Vitrage isolant selon l'une quelconque des revendications précédentes, caractérisé en ce que la pièce d'écartement est entourée du côté extérieur par une nervure d'étanchéité disposée entre les vitres.

12. Vitrage isolant selon la revendication 11, caractérisé en ce qu'entre les vitres, une autre nervure d'étanchéité est disposée du côté intérieur, appliquée contre la pièce d'écartement.

13. Vitrage isolant selon l'une quelconque des revendications 1 à 10, caractérisé en ce que les filaments sont disposés selon une densité croissant vers le bord et en ce que l'espace entre les vitres est rendu étanche par une couche de résine appliquée du côté extérieur sur les filaments.

14. Vitrage isolant selon l'une quelconque des revendications précédentes, caractérisé en ce que le corps moulé est fixé sur les vitres à l'aide de feuilles adhésives transparentes.

15. Vitrage isolant selon l'une quelconque des revendications précédentes, caractérisé en ce que le corps moulé est réalisé dans sa section transversale en forme de T, la nervure du corps moulé en forme de T étant disposée entre les vitres et les côtés du corps moulé en forme de T empiétant sur les arêtes extérieures des vitres.

16. Vitrage isolant selon l'une quelconque des revendications précédentes, caractérisé par son utilisation en tant qu'élément sans cadre pour fenêtre, mur, toiture, porte ou balustrade.

17. Vitrage isolant selon la revendication 16, caractérisé en ce qu'au moins un corps tubulaire est inséré par adhérence dans au moins une section du corps moulé en s'étendant dans le sens longitudinal de ce dernier.

18. Vitrage isolant selon la revendication 17, caractérisé en ce que le corps tubulaire loge sur au moins une partie de sa longueur, une barre en tant qu'axe qui dépasse des extrémités du corps tubulaire.

19. Vitrage isolant selon la revendication 16, caractérisé en ce qu'au moins une bande profilée creuse est insérée par adhérence dans au moins une section du corps moulé en s'étendant dans le sens longitudinal de ce dernier.

20. Vitrage isolant selon l'une quelconque des revendications 16 à 19, caractérisé en ce que, en plus de leur assemblage par adhérence par le corps moulé, les vitres sont jointes par adhérence par l'intermédiaire d'un assemblage à vis ou à rivet dans la zone périphérique.

21. Vitrage isolant selon l'une quelconque des revendications 16 à 19, caractérisé en ce que, en plus de leur assemblage par adhérence par le corps moulé, les vitres sont jointes par adhérence dans la zone périphérique, par l'intermédiaire d'une masse collante, visqueuse, introduite dans des trous de passage profilés des vitres et durcie.

22. Vitrage isolant selon l'une quelconque des revendications 16 à 21, caractérisé en ce que le vitrage isolant est disposé de manière à pouvoir être tourné à 180°.

23. Vitrage isolant selon l'une quelconque des revendications 16 à 22, caractérisé en ce que le vitrage isolant est monté à rotation autour de l'un des axes médians de la surface vitrée.

24. Vitrage isolant selon la revendications 23, caractérisé en ce qu'au moins un élément support est prévu entres les vitres, à peu près au centre de la surface desdites vitres, transversalement par rapport au sens longitudinal du corps moulé.

25. Vitrage isolant selon l'une quelconque des revendications 16 à 24, caractérisé en ce qu'entre les vitres, à peu près au centre de la surface desdites vitres, est insérée une bande d'écartement qui est formée par le corps moulé, qui assemble par adhérence les vitres et s'étend le long de l'un des axes médians au moins des vitres.

26. Vitrage isolant selon la revendication 25, caractérisé en ce qu'au moins un corps tubulaire est inséré par adhérence dans au moins une section de la bande d'écartement, en s'étendant dans le sens longitudinal de cette dernière.

27. Vitrage isolant selon l'une quelconque des revendications 16 à 26, caractérisé en ce que dans l'espace entre les vitres est insérée une structure de croisillons avec des croisillons répartis sur la surface des vitres et qui sont respectivement formés par un corps moulé.

28. Vitrage isolant selon l'une quelconque des revendications 16 à 27, caractérisé en ce que trois vitres au moins sont assemblées à l'aide des corps moulés situés sur le pourtour pour former un corps de panneau.

29. Vitrage isolant selon l'une quelconque des revendications 16 à 27, caractérisé en ce qu'entre les vitres est disposé un panneau en plastique ou une feuille en plastique qui est assemblé par adhérence avec les vitres en formant une structure composite, à l'aide de deux corps moulés opposés l'un à l'autre.

30. Vitrage isolant selon l'une quelconque des revendications 16 à 27, caractérisé en ce que le corps moulé situé sur le pourtour est plus large dans sa partie inférieure et/ou supérieure que dans les parties latérales.

31. Vitrage isolant selon l'une quelconque des revendications 16 à 30, caractérisé en ce que les vitres sont munies à l'intérieur d'un masque en céramique appliqué sur le pourtour.

32. Vitrage isolant selon l'une quelconque des revendications 16 à 30, caractérisé en ce que les bandes profilées situées sur le pourtour ou les filets profilés en U couvrant les deux vitres sont en plastique, en bois ou en aluminium et sont appliqués sur les vitres, à l'extérieur.

33. Vitrage isolant selon la revendications 32, caractérisé en ce que les bandes profilées présentent au moins dans la zone de l'arête inférieure des vitres, des façonnages adaptés à l'ajustement et destinés à des écrans contre la pluie et le vent disposés dans la traverse dormante.

34. Vitrage isolant selon l'une quelconque des revendications 16 à 33, caractérisé en ce que l'une des vitres au moins est en verre trempé ou partiellement trempé, en verre de sécurité composite ou en plastique transparent.

35. Vitrage isolant selon l'une quelconque des revendications 16 à 34, caractérisé en ce que l'une des vitres est équipée de façon à absorber le rayonnement.

36. Vitrage isolant selon la revendication 35, caractérisé en ce qu'au moins la vitre équipée pour absorber le rayonnement présente un revêtement Low-E sur sa surface tournée vers l'espace entre les vitres.

37. Procédé pour la fabrication d'un vitrage isolant sans cadre, caractérisé en ce qu'un tissu d'écartement imprégné de résine réalisé avec au moins deux couches extérieures opposées l'une à l'autre et des fils à âme passant transversalement par rapport à la surface des couches extérieures est posé sur le pourtour d'une première vitre, en ce que la seconde vitre est posée conformément à l'ajustage et en ce que le corps stratifié en résultant est comprimé dans un moule de sorte que les vitres en verre sont fixées de manière adhésive sur les couches extérieures du tissu, sur le pourtour, après quoi le moule est ouvert, les fils à âme se redressent et la résine durcit.

38. Procédé selon la revendications 37, caractérisé en ce que le moule est ouvert en calibrant jusqu'à ce que l'écartement souhaité entre les vitres soit obtenu.

39. Procédé pour la fabrication d'un vitrage isolant sans cadre, caractérisé en ce qu'un tissu textile d'écartement qui est réalisé avec au moins deux couches extérieures opposées l'une à l'autre et des fils à âme passant transversalement par rapport à la surface des couches extérieures, est imprégné de résine et est durci au moins en partie, en ce que, à partir de ce tissu d'écartement, après le durcissement au moins partiel, des corps moulés susceptibles d'être montés sont préfabriqués et en ce que ces corps moulés sont ensuite insérés entre deux vitres au moins, sur le pourtour, de façon à donner l'écartement et sont collés de manière adhésive avec les vitres.

40. Procédé selon la revendication 39, caractérisé en ce que, après l'imprégnation et avant leur durcissement définitif, les corps moulés passent dans un outil de moulage par estampage au cours d'un processus continu.

41. Procédé selon la revendication 39 ou 40, caractérisé en ce que les corps moulés sont dotés en une opération, d'un revêtement adhésif sur au moins une couche extérieure du tissu d'écartement et d'une nervure d'étanchéité adhésive sur au moins l'une des couches latérales.
